# DEMANDE DE BREVET EUROPEEN

(11) **EP 2 316 553 A1**
(43) Date de publication de la demande: **04.05.2011**
(21) Numéro de dépôt: 10290507.2
(22) Date de dépôt: 24.09.2010
(51) Int. Cl.: B01D 21/01, C02F 1/66, C02F 1/52, C02F 101/10, C02F 101/20, C02F 103/14, C02F 101/12, C02F 103/16, C02F 1/74, C02F 1/48

(54) **Procédé de désulfatation des rejets acides de l'industrie du Titane**

(30) Priorité: 25.09.2009 FR 0904583
(71) Demandeur: Ferlay, Serge, 63290 Chateldon (FR); Castillo, Jean-Michel, 87220 Feytiat (FR); Faggionni, Nello, 62970 Courcelles Les Lens (FR); Schmickrath, Georges, 75001 Paris (FR)
(72) Inventeur: Ferlay, Serge, 63290 Chateldon (FR); Castillo, Jean-Michel, 87220 Feytiat (FR); Faggionni, Nello, 62970 Courcelles Les Lens (FR); Schmickrath, Georges, 75001 Paris (FR)
(74) Mandataire: Oudin, Stéphane

(57) **Abrégé**

La présente invention concerne un procédé de désulfatation des rejets acides de l'industrie du Titane. La présente invention concerne notamment un procédé de désulfatation d'un effluent liquide, comprenant de l'acide sulfurique, issu d'un procédé de production de l'oxyde de titane **caractérisé en ce qu**'il comprend une étape (i) consistant à mettre en contact ledit effluent liquide avec une composition comprenant du zinc. Le procédé comprend en outre une étape (ii) consistant à séparer le mélange issu de la mise en contact effectuée à l'étape (i) en un effluent liquide et un résidu solide. Le plomb contenu dans le résidu solide peut être séparé par séparation magnétique basse intensité (étape iii').

## Description

La présente invention concerne un procédé de désulfatation des rejets acides de l'industrie du Titane.

La présente invention concerne notamment un procédé de désulfatation d'un effluent liquide, comprenant de l'acide sulfurique, issu d'un procédé de production de l'oxyde de titane **caractérisé en ce qu**'il comprend une étape (i) consistant à mettre en contact ledit effluent liquide avec une composition comprenant du zinc.

Le pigment blanc le plus utilisé dans les peintures est l'oxyde de titane (4 Mt/an); classiquement, l'oxyde de titane purifié est obtenu à partir de minerais (e.g. ilménite, rutile, leucoxéne, anatase).

L'attaque de ces matières premières est faite à 150°C avec de l'acide sulfurique concentré (85 à 98%), généralement produit en interne par les usines; les ions TiO²⁺, Fe²⁺ et Fe³⁺ passent en solution, accompagnés de diverses impuretés (e.g. Ni, Cr, Mn).

Après hydrolyse (plusieurs heures à 110°C), un gel d'hydroxyde de titane, TiO(OH)₂ est récupéré par filtration puis lavage; ce gel est calciné à 1000°C pour obtenir l'oxyde TiO₂.

Les principaux polluants contenus dans ces eaux sont l'acide sulfurique et le fer; ce dernier est précipité pour partie, au refroidissement avant l'hydrolyse, pour le reste par cristallisation du sulfate de fer heptahydraté (FeSO₄, 7 H₂O).

Le chrome est réduit sous forme trivalente par le sulfate ferreux ; le manganèse et le nickel sont adsorbés sur les hydroxydes de fer.

Ainsi, le déchet principal final est un acide sulfurique à 20 / 25% contenant des faibles quantités de métaux lourds du type suivant:

| | concentration |
|---|---|
| H₂SO₄ | 21 % |
| Fe | 1,2 % |
| Mg | 0,5 % |
| Al | 0,2 % |
| Na | 0,2 % |
| Ti | 0,2 % |
| V | 0,05 % |
| Mn | 0,03 % |
| Cr | 0,02 % |
| Ca | 0, 02 % |
| Pb | < 1 ppm |
| Cu | 0,2 ppm |
| Cd | 0,01 ppm |
| Hg | < 0,001 ppm |

Une usine conventionnelle de production de TiO₂ génère de 300 à 750000 tonnes annuellement de ces acides. Classiquement ces déchets sont soit reconcentrés quatre fois pour réutilisation à une concentration d'H₂SO₄ de 85 à 90% ou neutralisés et désulfatés à la chaux et ou à la magnésie en produisant du gypse hydraté ou du sulfate de magnésium, qui peuvent être commercialisés si leur purification est correcte.

L'utilisation de chaux ou de magnésie dans les procédés de désulfatation de l'art antérieur représente un coût important. La présente invention se propose de fournir un procédé de désulfatation plus économique, moins producteur de déchets et qui permet dans le même temps de valoriser d'autres déchets et plus particulièrement un déchet zincifère.

Ces derniers déchets ou coproduits sont très abondants en Europe du Nord et attachés à l'industrie lourde d'où, une concentration géographique importante (e.g. nord de l'Espagne, nord de l'Italie, nord de la France, Ruhr, sud de la Belgique, Pays Bas, Danemark).

Ainsi la présente invention concerne un procédé de désulfatation d'un effluent liquide , comprenant de l'acide sulfurique, issu d'un procédé de production de l'oxyde de titane remarquable en ce qu'il comprend une étape (i) consistant à mettre en contact ledit effluent liquide avec une composition comprenant du zinc.

La présente invention concerne également un procédé permettant d'éliminer, en tout ou partie, l'acide sulfurique compris dans un effluent liquide issu d'un procédé de production de l'oxyde de titane remarquable en ce que qu'il comprend une étape (i) consistant à mettre en contact ledit effluent liquide issu d'un procédé de production de l'oxyde de titane avec une composition comprenant du zinc.

La présente invention permet d'éliminer un effluent (l'acide sulfurique) en traitant et valorisant un déchet zincifère. Dans le cadre de la présente invention, les termes « désulfatation » et « élimination de l'acide sulfurique » ont la même signification.

Dans le cadre de la présente invention, le terme « effluent liquide, comprenant de l'acide sulfurique, issu d'un procédé de production de l'oxyde de titane » fait référence aux effluents liquides produits après l'hydrolyse d'une solution issu d'une attaque d'un minerai contenant du titane par de l'acide sulfurique et les effluents liquides issus du lavage d'un gel d'hydroxyde de titane. Lesdits effluents peuvent être indifféremment issus des procédés précédemment décrits ou avoir subi une ou plusieurs étapes de traitements (e.g. Filtration, précipitation) pour autant qu'ils contiennent de l'acide sulfurique. Selon un mode de réalisation préféré du procédé selon l'invention, ledit effluent liquide, comprenant de l'acide sulfurique, issu d'un procédé de production de l'oxyde de titane comprend entre 10 et 30% d'acide sulfurique et encore plus préférentiellement entre 20 et 30% d'acide sulfurique.

Selon un mode de réalisation préféré de l'invention, ladite étape (i) est une étape de lixiviation de ladite composition comprenant du zinc par ledit effluent liquide, comprenant de l'acide sulfurique, issu d'un procédé de production de l'oxyde de titane et en ce que ladite lixiviation est réalisée à un pH compris entre 2 et 5.

Selon un mode de réalisation préféré de l'invention, la composition comprenant du zinc est choisie dans le groupe comprenant les poussières de fonderie de laiton ou de zamak, les minerais oxydés de zinc, les boues de hauts fourneaux et les poussières d'aciérie électrique. Selon un mode réalisation encore plus préféré de l'invention ladite composition comprend au moins 10%, encore plus préférentiellement au moins 20% de Zinc.

Avantageusement, le procédé selon l'invention comprend en outre une étape (ii) consistant à séparer, le mélange issu de la mise en contact effectuée à l'étape (i), en un effluent liquide et un résidu solide. Par souci de clarté, il est précisé que le terme « séparer » signifie qu'au moins une partie de la phase liquide est retirée, du mélange issu de la mise en contact effectuée à l'étape (i) afin de constituer, ledit effluent liquide. Celui-ci peut contenir des traces (moins de 0,1% d'éléments solides). De la même façon, ledit résidu solide, obtenu après l'étape (ii), peut contenir une portion de liquide. Préférentiellement, ledit résidu solide comprend moins de 75% de liquide et tout à fait préférentiellement moins de 50%. Cette séparation est avantageusement faite en combinant une Séparation Magnétique Basse Intensité et une centrifugation.

Certaines compositions comprenant du zinc comme les poussières d'aciéries électriques, comprennent en outre une portion abondante de chlore (5 à 10%) et de fluor (0.1 à 0.3%) ce qui peut poser un problème de corrosion. En effet, en milieu acide, la solubilisation du fer et du chlore conduit à un milieu très corrosif (FeCl₃), qu'il est préférable d'éviter dans des installations industrielles.

Afin d'éviter ce type de problème et selon un mode de réalisation préféré, le procédé de désulfatation d'un effluent liquide, comprenant de l'acide sulfurique, issu d'un procédé de production de l'oxyde de titane selon l'invention comprend en outre une étape (i'), préalable à ladite étape (i), consistant à déchlorurer ladite composition comprenant du zinc. Ainsi, la composition comprenant du zinc utilisé à l'étape (i) contient une concentration en chlore compatible avec son utilisation dans le cadre du procédé selon l'invention.

Selon un mode de réalisation encore plus préféré de l'invention, ladite étape (i') comprend une étape de mise en suspension de ladite composition comprenant du zinc dans de l'eau, suivie d'une étape où le pH de ladite suspension est ajusté entre 8 et 8.5, suivie d'une étape consistant à séparer la phase liquide et la phase solide de ladite suspension. Ladite phase solide obtenu peut être ensuite utilisée comme composition comprenant du zinc dans le procédé selon l'invention. Comme indiqué précédemment, le terme « séparer » ne signifie pas que la phase solide obtenue est totalement sèche. Ainsi la phase solide obtenue peut comprendre de 25 à 50% d'humidité.

L'effluent liquide issu de l'étape (ii) contient du sulfate de zinc qu'il est possible de valoriser. Cette valorisation peut notamment consister en la production de sulfate de zinc heptahydraté ou monohydraté. Cette valorisation peut être réalisée via différentes voies. Ainsi, selon un mode de réalisation préféré, le procédé selon l'invention comprend en outre une étape (iii) consistant à concentrer le sulfate de zinc compris dans l'effluent liquide issu de l'étape (ii). Selon un mode de réalisation encore plus préféré, l'étape (iii) consiste à réduire le volume, dudit effluent liquide issu de l'étape (ii), de 33 à 75%. Selon un autre mode de réalisation préféré, l'étape (iii) consiste à précipiter tout ou partie des sels présents dans ledit effluent liquide issu de l'étape (ii). Cette opération peut notamment être menée en continu avec un échangeur, un cristallisoir, un dévésiculeur, un condenseur, un filtre et/ou une centrifugeuse. Le sulfate de zinc précipité peut encore être valorisé sous forme d'acide sulfurique. Cette opération peut notamment être réalisée par grillage du sulfate de zinc. Ainsi, selon un mode de réalisation tout à fait préféré, le précipitât issus de l'étape (iii) est chauffé à une température supérieure à 500°C et préférentiellement à une température supérieure à 1000°C.

Le résidu solide issu de l'étape (ii) du procédé selon l'invention peut contenir différents éléments, comme le plomb et les ferrites (e.g. La ferrite de zinc), qu'il est avantageux de valoriser. Le plomb contenu dans le résidu solide issu de l'étape (ii) peut être séparé par séparation magnétique basse intensité et utilisé ensuite dans la métallurgie du plomb. Ainsi selon un mode de réalisation préféré de l'invention, le procédé comprend en outre une étape (iii') consistant à soumettre le résidu solide issu de l'étape (ii) à une séparation magnétique basse intensité. Les ferrites obtenues après ladite étape (iii') peuvent être avantageusement utilisé dans la métallurgie du zinc et la peinture anti-corrosion.

La figure 1 présente un diagramme récapitulatif d'un mode de réalisation d'un procédé selon l'invention dans lequel la composition comprenant du zinc est issue des poussières d'aciérie électrique (EAFD).

La figure 2 présente un diagramme récapitulatif d'un mode de réalisation de l'étape (i'), du procédé selon l'invention, appliquée aux poussières d'aciérie électrique (EAFD).

La figure 3 présente un diagramme récapitulatif d'un mode de réalisation des étapes (i), (ii) et (iii), du procédé selon l'invention, appliquée aux poussières d'aciérie électrique (EAFD).

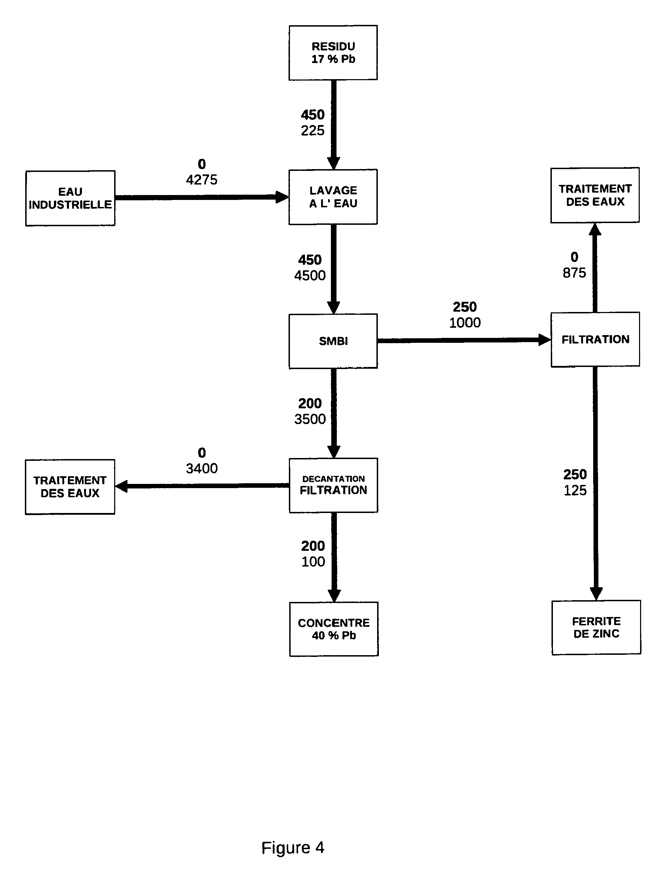

La figure 4 présente un diagramme récapitulatif d'un mode de réalisation de l'étape (iii'), du procédé selon l'invention.

La figure 5 présente un diagramme récapitulatif d'un mode de réalisation du traitement des eaux issues du procédé selon l'invention.

### Exemple:

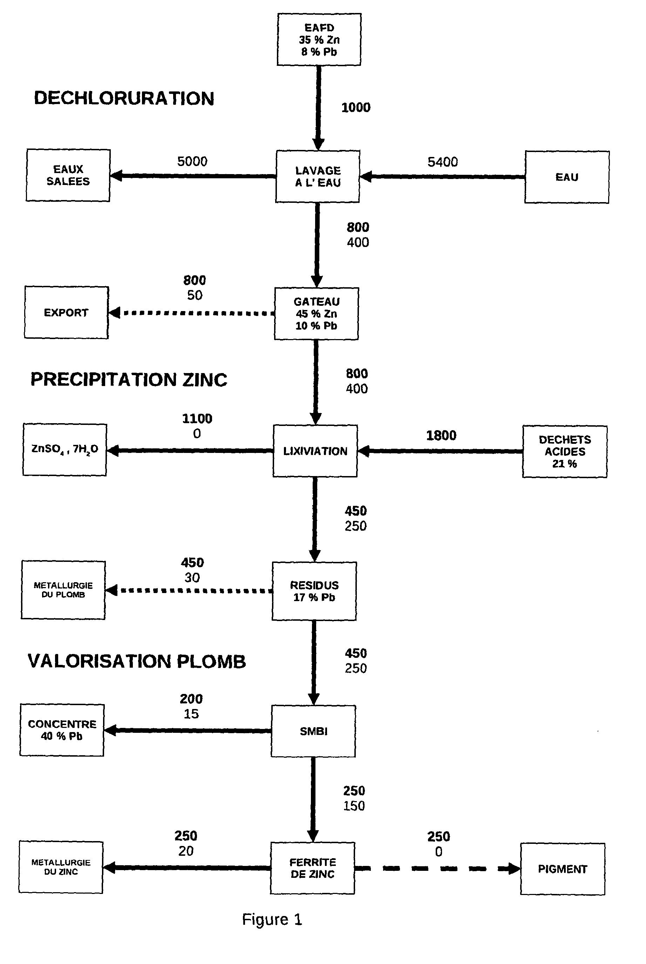

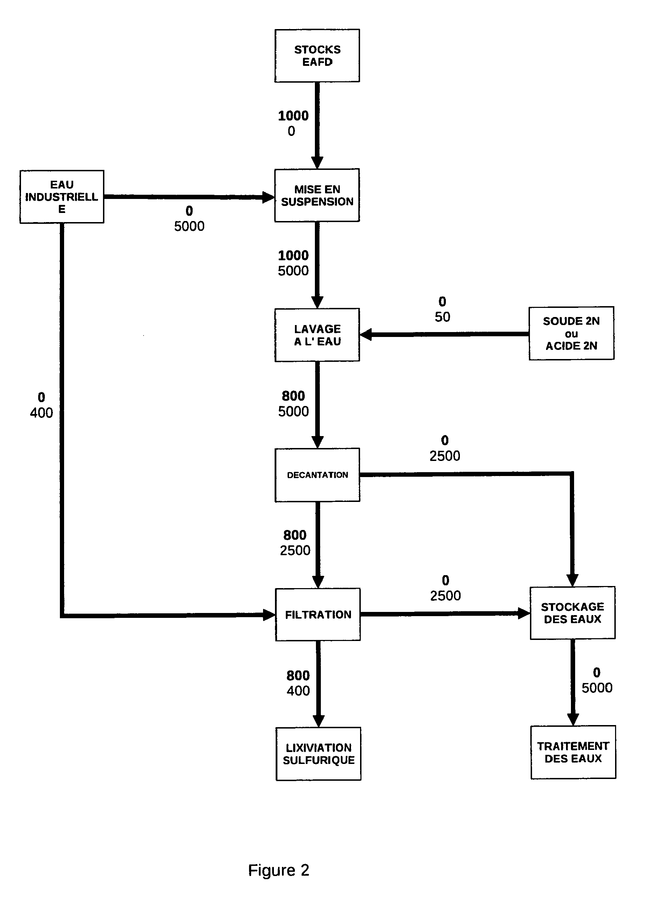

### 1-Déchloruration (figure 1 et 2)

Il s'agit d'un lavage à l'eau des poussières d'aciéries (EAFD) comprenant une mise en suspension, la lixiviation à pH contrôlé (8 à 8.5) et une décantation/filtration

Le rendement massique de cette opération est de 80% (75 à 92% selon l'origine des EAFD) et les poussières lavées ont la composition suivante:

| Elément | Poussières (%) | Après lavage (%) | Solubilisation (%) |
|---|---|---|---|
| | | | |
| Zn | 35 | 45 | 0 |
| Pb | 8 | 10 | 0 |
| Fe | 12 | 15 | 0 |
| Na | 2.5 | 0.5 | 85 |
| K | 2.8 | 0.2 | 95 |
| Cl | 8.3 | 0.3 | 97 |
| F | 0.1 | 0.1 | 50 |
| S | 0.9 | 0.5 | 58 |

Il faut retenir de ces résultats que les chlorures, les sulfates et dans une moindre mesure les fluorures de sodium et potassium sont solubilisés.

Les eaux résultant du lavage ont la composition suivante:

| Elément | mg/l |
|---|---|
| | |
| Zn | < 0.1 |
| Pb | < 0.1 |
| Fe | 0.4 |
| Na | 4250 |
| K | 5320 |
| Ca | < 0.1 |
| Mg | 0.8 |
| Mn | 0.1 |
| Si | < 0.1 |
| Al | 0.2 |
| Cd | < 0.1 |
| Cr | < 0.1 |
| Cu | < 0.1 |
| P | < 0.1 |
| Cl | 16100 |
| F | 130 |
| S | 1040 |

Les eaux de lavage sont rejetables dans le milieu naturel sans aucun traitement. L'origine des poussières influence peu ces résultats car ils peuvent être modulés par la concentration solide choisie pour le lavage des poussières.

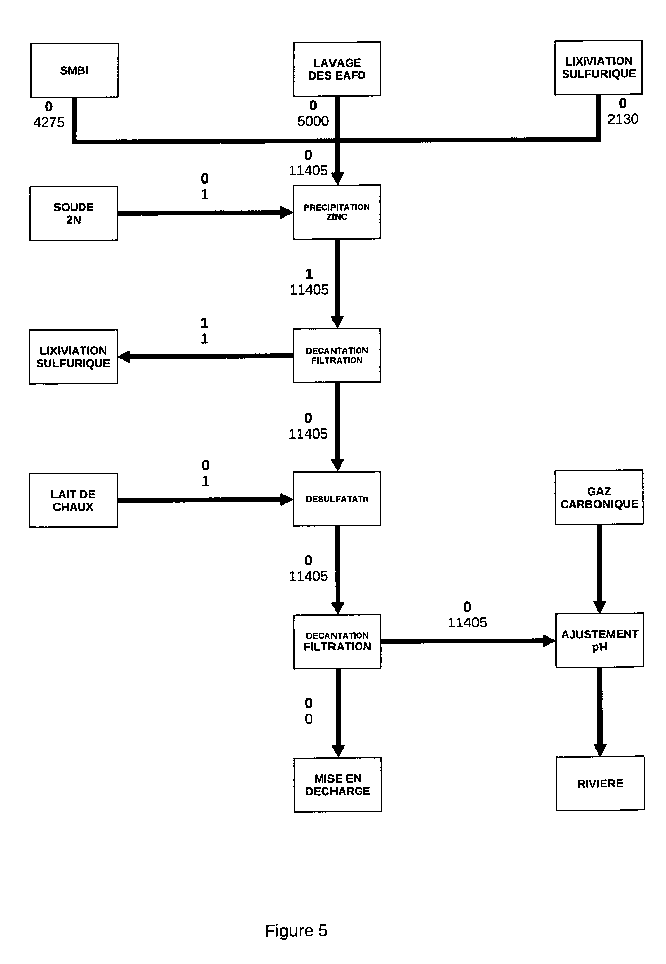

Dans le cadre de la présente invention, les eaux de lavage sont regroupées avec les eaux des étapes suivantes, dans une station de traitement des eaux (voir figure 5).

La proximité de la mer ou d'une zone d'estuaire d'eau saumâtre permettra un rejet simplifié de ces effluents salés.

A ce stade, les poussières lavées sont commercialisables après un séchage partiel (5 à 10% d'humidité), mais, dans le cadre de l'invention, elles sont traitées par une lixiviation avec les rejets d'acide sulfurique des ateliers de production d'oxyde de titane.

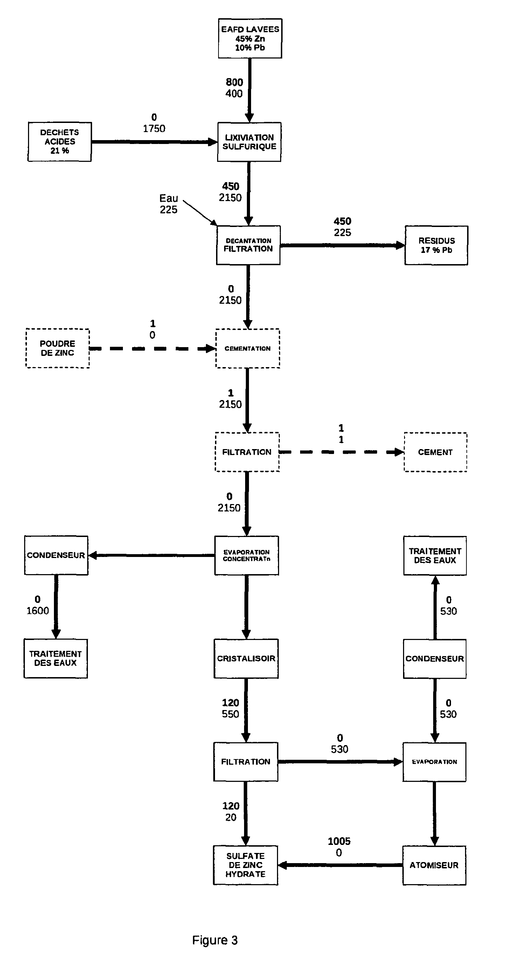

### 2-Précipitation zinc (figure 3)

La lixiviation à température ambiante de ces poussières lavées, avec l'acide sulfurique à sa concentration de fourniture par les usines est réalisée par batch sous contrôle du pH (>2 et <5) pour éviter la solubilisation des rares oxydes de fer non combinés et précipiter les hydroxydes d'aluminium.

Le fer ferreux est oxydé à pH 4 ou 5 par de l'air ou par de l'eau de Javel ou du bioxyde de Mn pour précipiter le fer ferrique.

Le ferrite de Zn étant très peu attaqué et les sulfates de plomb et de calcium étant insolubles en milieu sulfurique, seules les oxydes sont solubilisés d'où un rendement masse global de 35 à 55% et une solution de sulfate à 130 à 170 g/l Zn et 1 à 100 mg/l de Fe, Pb, Cu, Sn, Cr.

Le résidu solide, composé de sulfate de plomb, de ferrite de zinc et d'hydroxyde ferrique est décanté, filtré et lavé sur filtre.

A ce stade, le résidu solide contiendra 17% Pb et après séchage partiel est commercialisable comme «minerai de plomb» ; cependant le caractère ferromagnétique des ferrites permet d'envisager une valorisation complémentaire.

Selon la destination du produit fini (électrolyse du zinc, traitement du bois ou alimentation animale) une purification par cémentation à la poudre de zinc peut être mise en oeuvre pour capter les traces de métaux lourds. Les céments résultant de ce traitement (e.g. Pb, Cu, Cd) sont notamment commercialisés, après lavage, comme les concentrés de plomb, dans la métallurgie du plomb.

Une purification complémentaire en Cl et F (objectifs <300 mg/l de Cl et <20 mg/l de F), peut être nécessaire, selon les marchés du sulfate de zinc envisagé; cette extraction est réalisée à pH 4 à 5 sur des résines échangeuses d'ions spécifiques.

La solution de sulfate de zinc est concentrée par évaporation sous vide et selon la température choisie (<39°C ou 60°C) permet la production de sulfate de zinc heptahydraté ou monohydraté. Cette opération peut être menée en continu avec échangeur, cristallisoir, dévésiculeur, condenseur et filtration ou centrifugation. Ladite opération permet la production de sulfate cristallisé. Cette opération peut être menée en 2 étapes:
Evaporation 1 : à concentration modérée par exemple évaporation des 1/3 ou 2/3 de la solution, pour interdire la précipitation des impuretés résiduelles (Na, Mg, Mn, Al) et, ainsi permettre la cristallisation d'un sulfate de zinc de bonne qualité.
Evaporation 2 : totale, précipitant la totalité des sels présents dans le culot d'évaporation; cette phase peut être réalisée par un atomiseur; le sulfate de zinc précipité est pollué par les impuretés résiduelles, mais néanmoins commercialisable.

Le marché du sulfate de zinc étant limité et le problème d'élimination des acides très important, une variante est à envisager : le recyclage des sulfates sous forme d'acide sulfurique par grillage du sulfate de zinc.

En effet :
A 1000°C :

   ZnSO₄ → ZnO + SO₃
Ou à 500°C :

   3ZnSO₄ + ZnS → 4 ZnO + 4SO₂

Dans les deux cas, cette production d'anhydride sulfureux ou sulfurique s'intégrerait dans le cycle de production habituelle de l'acide sulfurique.

### 3-Valorisation plomb

Après lixiviation sulfurique, il s'avère que la fraction magnétique du résidu plombifère est pauvre en plomb et riche en zinc (20% Zn et 1% Pb) ; c'est un ferrite complexe de Zn, Mn, Cr et Ca où le zinc domine très largement.

Une séparation magnétique basse intensité (SMBI) réalisée sur un simple tambour magnétique à aimant permanent permet de séparer les ferrites et le «concentré de sulfate de plomb» avec un excellent rendement, favorisé en cela par la différence de granulométrie entre les deux fractions.

Ceci conduit, à la production de ferrites et de «concentré de plomb» à 20/30% Pb en moyenne ; ce dernier trouve, naturellement, sa destination vers la métallurgie du Pb.

Pour ce qui concerne les ferrites deux marchés sont envisageable : la métallurgie du zinc et la peinture anticorrosion.

L'exemple ci-dessus montre clairement les avantages économiques et environnementaux du procédé selon l'invention. En effet, le coût des matières premières et du réactif principal est négatif, puisqu'il s'agit d'une prestation d'élimination de déchets. De plus, tous ces déchets sont totalement valorisés et il n'y a aucun déchet solide généré.

## Revendications

1. Procédé de désulfatation d'un effluent liquide, comprenant de l'acide sulfurique, issu d'un procédé de production de l'oxyde de titane **caractérisé en ce qu'**il comprend une étape (i) consistant à mettre en contact ledit effluent liquide avec une composition comprenant du zinc choisie dans le groupe comprenant les poussières de fonderie de laiton ou de zamak, les minerais oxydés de zinc, les boues de hauts fourneaux et les poussières d'aciérie électrique.

2. Procédé de désulfatation d'un effluent liquide, comprenant de l'acide sulfurique, issu d'un procédé de production de l'oxyde de titane selon la revendication 1 **caractérisé en ce qu'**il comprend en outre une étape (ii) consistant à séparer, le mélange issu de la mise en contact effectuée à l'étape (i), en un effluent liquide et un résidu solide.

3. Procédé de désulfatation d'un effluent liquide, comprenant de l'acide sulfurique, issu d'un procédé de production de l'oxyde de titane selon l'une des revendications précédentes **caractérisé en ce que** ladite composition comprenant du zinc comprend au moins 10% de Zinc.

4. Procédé de désulfatation d'un effluent liquide, comprenant de l'acide sulfurique, issu d'un procédé de production de l'oxyde de titane selon l'une des revendications précédentes **caractérisé en ce qu'**il comprend en outre une étape (i'), préalable à ladite étape (i), consistant à déchlorurer ladite composition comprenant du zinc.

5. Procédé de désulfatation d'un effluent liquide, comprenant de l'acide sulfurique, issu d'un procédé de production de l'oxyde de titane selon la revendication 4 **caractérisé en ce que** ladite étape (i') comprend une étape de mise en suspension de ladite composition comprenant du zinc dans de l'eau, suivie d'une étape où le pH de ladite suspension est ajusté entre 8 et 8.5, suivie d'une étape consistant à séparer la phase liquide et la phase solide de ladite suspension.

6. Procédé de désulfatation d'un effluent liquide, comprenant de l'acide sulfurique, issu d'un procédé de production de l'oxyde de titane selon l'une des revendications précédentes **caractérisé en ce que** ladite étape (i) est une étape de lixiviation de ladite composition comprenant du zinc par ledit effluent liquide, comprenant de l'acide sulfurique, issu d'un procédé de production de l'oxyde de titane et **en ce que** ladite lixiviation est réalisée à un pH compris entre 2 et 5.

7. Procédé de désulfatation d'un effluent liquide, comprenant de l'acide sulfurique, issu d'un procédé de production de l'oxyde de titane selon l'une des revendications 2 à 6 **caractérisé en ce qu'**il comprend en outre une étape (iii) consistant à concentrer le sulfate de zinc compris dans l'effluent liquide issu de l'étape (ii).

8. Procédé de désulfatation d'un effluent liquide, comprenant de l'acide sulfurique, issu d'un procédé de production de l'oxyde de titane selon la revendication 7 **caractérisé en ce que** l'étape (iii) consiste à réduire le volume, dudit effluent liquide issu de l'étape (ii), de 33 à 75%.

9. Procédé de désulfatation d'un effluent liquide, comprenant de l'acide sulfurique, issu d'un procédé de production de l'oxyde de titane selon la revendication 7 **caractérisé en ce que** l'étape (iii) consiste à précipiter tout ou partie des sels présents dans ledit effluent liquide issu de l'étape (ii).

10. Procédé de désulfatation d'un effluent liquide, comprenant de l'acide sulfurique, issu d'un procédé de production de l'oxyde de titane selon la revendication 9 **caractérisé en ce que** le précipitât issus de l'étape (iii) est chauffé à une température supérieure à 500°C et préférentiellement à une température supérieure à 1000°C.

11. Procédé de désulfatation d'un effluent liquide, comprenant de l'acide sulfurique, issu d'un procédé de production de l'oxyde de titane selon l'une des revendications 2 à 10 **caractérisé en ce qu'**il comprend en outre une étape (iii') consistant à soumettre le résidu solide issu de l'étape (ii) à une séparation magnétique basse intensité.

12. Procédé permettant d'éliminer, en tout ou partie, l'acide sulfurique compris dans un effluent liquide issu d'un procédé de production de l'oxyde de titane **caractérisé en ce que** qu'il comprend une étape (i) consistant à mettre en contact ledit effluent liquide issu d'un procédé de production de l'oxyde de titane avec une composition comprenant du zinc.
